# EUROPEAN PATENT SPECIFICATION

(11) **EP 3 676 165 B1**
(45) Date of publication and mention of the grant of the patent: **14.07.2021**
(21) Application number: 18799668.1
(22) Date of filing: 31.08.2018
(51) Int. Cl.: B62K 27/00

(54) **CONVERTIBLE BICYCLE TRAILER/TRANSPORT UNIT**
UMWANDELBARE ANHÄNGER-/TRANSPORTEINHEIT FÜR FAHRRÄDER
UNITÉ DE TRANSPORT/REMORQUE DE VÉLO CONVERTIBLE

(30) Priority: 01.09.2017 GB 201714030
(43) Date of publication of application: 08.07.2020
(73) Proprietor: Veadventures Limited, London NW1 7RH (GB)
(72) Inventor: ENGEL, Rebecca, London NW1 7RH (GB); VIEIRA, Luiz, London NW1 7RH (GB)
(74) Representative: Gallafent, Richard John
(86) International application number: PCT/EP2018/073549
(87) International publication number: WO 2019/043205

(56) References cited:
- CN-U- 201 839 956
- DE-A1- 10 336 579
- DE-A1- 19 618 064
- DE-A1-102006 020 688

## Description

This invention relates to convertible bicycle trailer/transport units.

Although bicycles are themselves a means of transport, it is very often the case that bicycles themselves need to be transported from one place to another. Because of their construction and configuration, they are, generally speaking, not the most convenient of items to transport from one place to another. One approach is to carry them by vehicle, either one with a luggage compartment large enough to take a bicycle such as a van or truck, or which is equipped with some form of a rack, either on its roof or transversely across its rear, to which the bicycle can be attached. An alternative approach is to render the bicycle foldable, but this is not ideal for many bicycles used for sporting or leisure activities.

It is known to provide transportation cases for bicycles which take the form of a casing which is configured to accommodate the principal components of a bicycle, once it has been dismantled, in particular by removing the wheels from the frame and the handlebar from the forward steering post. A typical example of such a transportation casing has been commercialised and is available under the Trade Mark POLARIS, see www.polaris-apparel.com/. As can be seen, it has a handle enabling the entire case to be lifted with the bicycle components stored inside it, as well as a number of ground-engaging wheels or castors enabling the loaded casing to be transported, for example, along a walkway or on a platform or other public area in a transportation system. However, such transportation cases have no other function than to act as a casing for a disassembled bicycle. Other bicycle transport cases are referred to in US-A-2004/010377. This US specification discloses a variety of collapsible case designs where, in its uncollapsed state, the case may be configured as a transportation container for the components of a bicycle and which may be reconfigured, together with certain other components not necessary for the transportation function, to act as a single wheel trailer for a bicycle. The disclosure of this US specification, and the prior art discussed in it relating to other bicycle transportation cases, does refer to a bicycle trailer which can be reconfigured into a bicycle carrying case, i.e. switched between a "transport case" mode and a "trailer" mode, and vice versa.

DE 10 2006020688A1 discloses a device for transporting bicycles and luggage consisting of two rectangular frames and cross pieces defining a boxlike structure. The horizontal and vertical members of the frames may be disconnected from one another and reassembled together with a wheel to form a trailer. During transportation of the bicycle, the boxlike structure may be covered with a tarpaulin. As explained in the US and German specifications, the provision of a transportation container for a bicycle which can be reconfigured into a trailer has a major practical advantage: it can be used by a traveller to transport their bicycle, for example, to a holiday destination and then, once there, it can be reconfigured to act as a trailer for the bicycle which has been reconstructed following its unpacking. The user then has a practical bicycle and trailer combination enabling the user to travel satisfactorily by bicycle with their luggage safely towed behind them in the trailer. The need to leave a dedicated transportation container at the port or airport destination, and to retrieve it later, is thus avoided, as is the cost of doing so, and the risk of damage or loss. The constructions described in the US and German specifications and in prior art documents to which the US specification refers, are complex and inconvenient to use. In particular they require an amount of dismantling and reconstruction to reconfigure the item from one use to another. We have now found that by constructing a trailer in a certain way, it is possible easily to reconfigure the trailer to enable it to act as a transportation container for a bicycle or the major components of a bicycle when taken apart, principally the frame, wheels, handlebar and saddle.

DE 19618064, which discloses all the features of the preamble of independent claim 1, describes a construction using two frames which can be assembled together with parts of one frame telescopically engaged in parts of the other, to form an elongate assembly for carrying a bicycle frame, the bicycle wheels and a towbar and trailer wheels, or which can be put together in an alternate arrangement to form a wheeled box trailer which can be towed by the assembled bicycle.

According generally to a first feature of the present invention, there is provided a bicycle trailer comprising a framework, detachable wheels mounted to either side of the framework, and a cover configured to surround the framework, wherein the framework includes a plurality of telescopically connected members enabling the volume encompassed by the framework to be varied, whereby the trailer may be used as a trailer towed behind a bicycle with the frame and cover surrounding a reduced volume for receiving items to be transported, or may be used as a carrying case configured to receive the wheels, frame and other components of a bicycle, together with the trailer wheels and a detachable towbar, and characterised in that the framework comprises two or more telescoping sections enabling the overall height and length of the framework to be extended sufficiently to accommodate a conventional bicycle frame, and which can be moved to a retracted position where they constitute members defining a reduced size interior space for receiving items which the user desires to transport when the trailer is being towed by the bicycle ridden by the user, and the cover comprises a plurality of sheet members enabling the cover to be likewise expanded or reduced to match the volume encompassed by the framework.

Preferably the framework comprises a generally rectangular base frame, two or more arched members fixed to the frame and two sockets fixed either side of the base frame for the receipt of a trailer wheel. Alternatively a transverse axle may be mounted on the frame to the ends of which the two trailer wheels may be attached. The base frame preferably includes a socket into which a towing bar may be inserted and locked therein.

The external shell preferably comprises one or more sections which may be deployed in an extended state when the trailer is being used as a carrying case to transport a bicycle and a partly folded relatively unextended state when the trailer is to be towed behind a bicycle.

The bicycle trailer preferably comprises at least two wheels mounted underneath the framework and enabling the trailer to be moved with rotation of those wheels when configured as a carrying case. Most preferred are four wheels each being castored. Particularly to assist moving the carrying case containing the bicycle components by rolling it along, a plurality of handles may be attached to the exterior of the cover, at convenient locations. The cover itself may be made up of a plurality of sections of flexible waterproof or water resistant material, and attached to the interior of the cover a plurality of rigid lightweight plates may be incorporated to provide impact resistance to the cover.

By constructing a trailer in this way, and using well-established principles of design, it is possible to provide a trailer which, with ease and convenience, can have its internal compartment expanded sufficiently to enable both its wheels, a towbar and the components of a bicycle - including the wheels frame, saddle and handlebar of the bicycle - to be accommodated. Once at the desired destination, the user can simply extract and reassemble the bicycle parts, and then partly collapse the trailer to its road-suitable size.

By way of example, an embodiment of the invention is illustrated in the accompanying drawings in which:
Figure 1 is a diagrammatic side view of a trailer according to the present invention, showing certain internal components;
Figure 2 is a front view of the trailer of Figure 1;
Figure 3 is a perspective view from behind of the trailer according to Figure 1;
Figure 4 is a top view of the trailer according to Figure 1;
Figure 5 is a diagrammatic side view of the trailer according to Figure 1 showing the internal framework and external cover when it has been configured for use as a bicycle carrier;
Figure 6 is a front view of the reconfigured trailer as shown in Figure 5;
Figure 7 is a diagrammatic perspective view from the front of the trailer when it has been reconfigured for use as a bicycle carrier, showing the arrangement of the internal framework and the external cover when both in their expanded state;
Figure 8 is a perspective view and Figure 9 a top view of the reconfigured trailer shown in Figures 5 to 7 and from the rear; and
Figure 10 is a diagrammatic perspective view of the internal framework of the trailer showing portions of a bicycle stowed therein as well as the trailer wheels stowed therein, and with the cover of the trailer and various other details omitted for clarity.

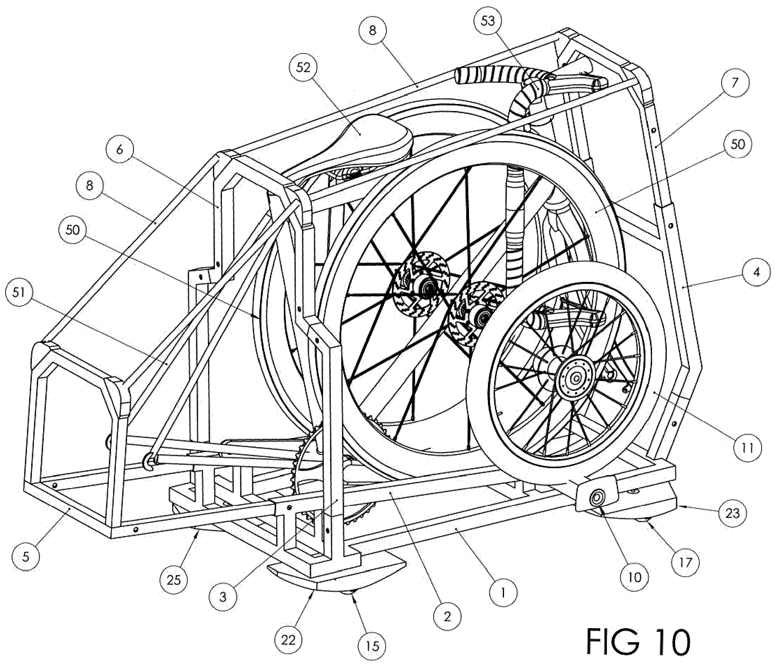

Referring to the drawings, the internal components of the trailer/bicycle carrier illustrated are best seen in Figure 10. The trailer comprises a generally rectangular base frame 1 having mounted on it a tubular framework consisting of two elongate side members 2, front and rear pairs of vertical support members 3 and 4 respectively, a rectangular frame member 5 with two legs which fit telescopically into the front ends of side members 2, an inverted U-shaped member 6 which fits via internal joint pieces into the upper ends of support members 3, an inverted U-shaped member 7 which fits telescopically into the upper ends of support members 4 and a set of tie bars 8 which connect the tops of members 5, 6 and 7. The ends of tie bars 8 engage in generally triangular plastics clips which engage on the upper corners of members 5, 6 and 7. Member 6 and tie bars 8 may be removed when the trailer is being used as a trailer and stored within the trailer ready for deployment when the trailer is reconfigured to act as a bicycle carrier.

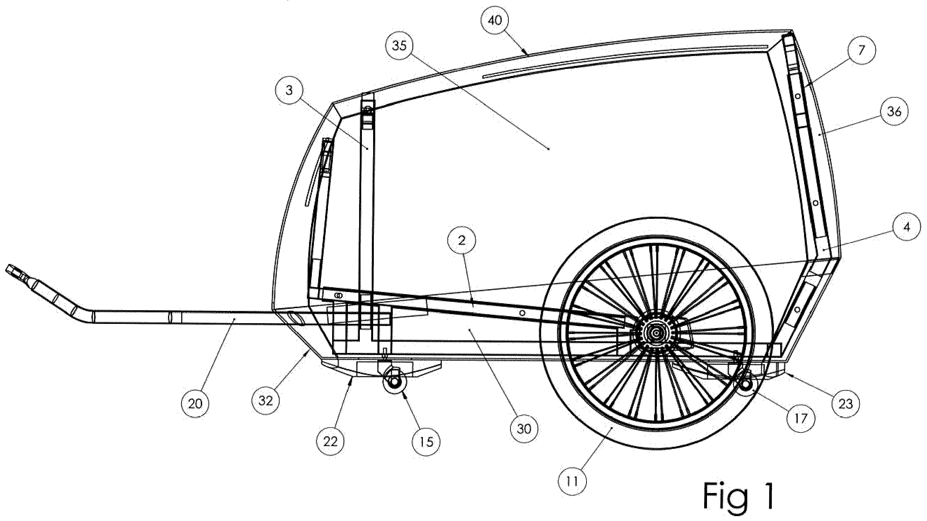

The base frame 1 has two socket units 10 into each of which a trailer wheel 11 may be clipped when the unit is being used as a trailer. As shown in Figure 1, mounted under the four corners of the base frame 1 are four moulded corner pieces 22, 23, 24 and 25, each fixed to the frame 1 with castor wheels 15, 17 mounted in the front and rear corner pieces respectively.

Adjacent corner piece 22 and attached to frame member 1 is a socket into which the trailing end of a towbar 20 may be fitted. Suitable locking means may be provided to hold the towbar 20 to the frame 1. The front end of the towbar may be attached to the bicycle in any one of the standard ways of doing so, known in a variety of forms.

Although the various frame members illustrated are square section ones, they can also be of circular cross-section.

The corner pieces 22 to 25 are connected to the external shell or covering of the trailer, which is composed principally of left and right side panels 30, 31, front and rear panels 32 and 33, side walls 35 connected to panels 30, 31, a rear wall 36 connected to panel 33 and an extending top and front cover section 40. Panels 30 to 33, panel 35 and cover section 40 constitute a water-resistant exterior to the trailer.

The panels may be connected to the framework members by way of a set of loops, some at least of which may be in the form of two tapes with complementary the fastener materials on one side to enable the loops to be secured round the framework members.

Cover section 40 may be attached to side walls 35, rear wall 36 and front panel 32 by means of a sliding clasp fastener 41 having two ends for the sliding clasps located adjacent the front end of cover section 40.

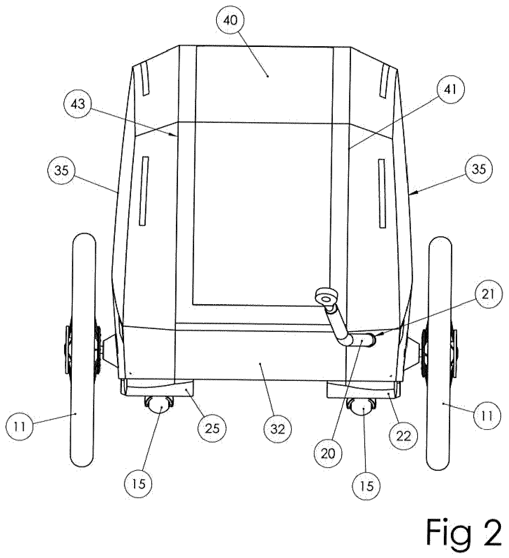

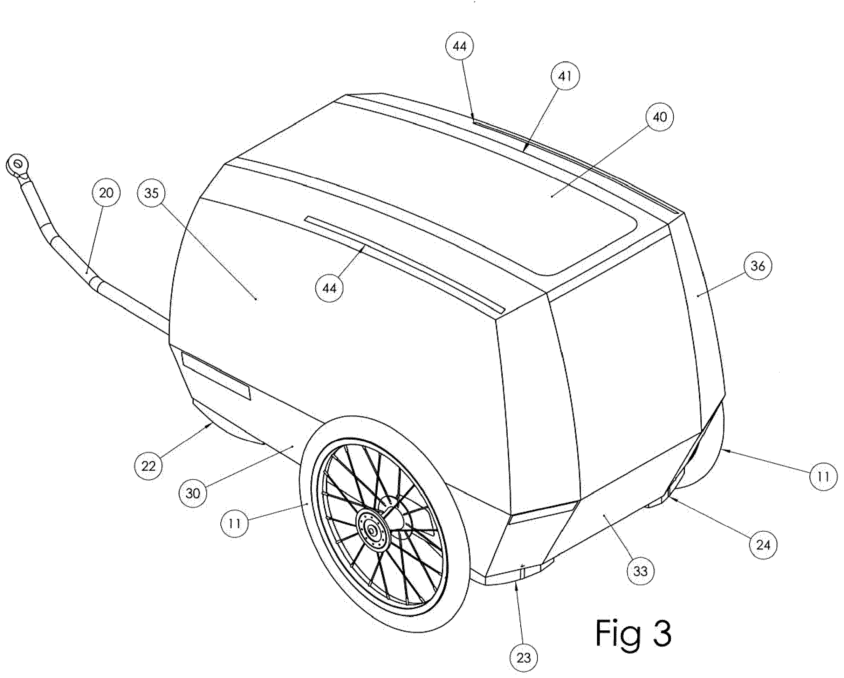

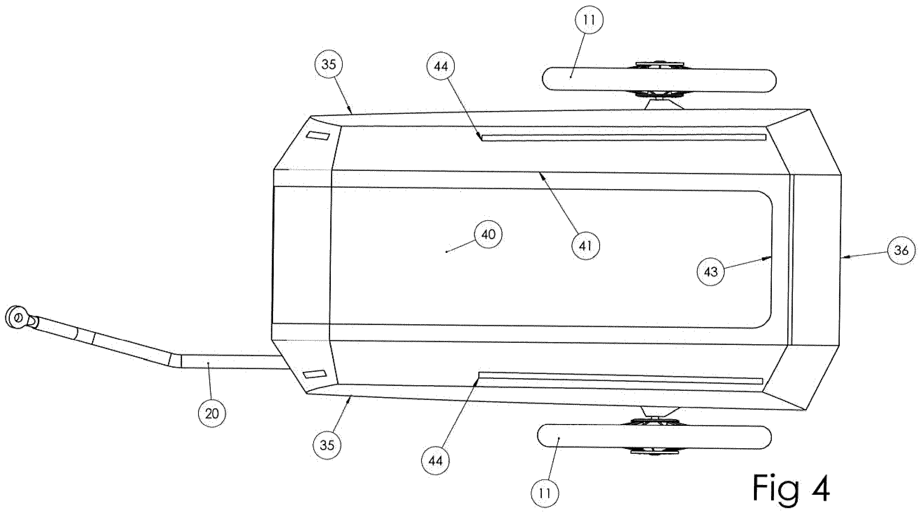

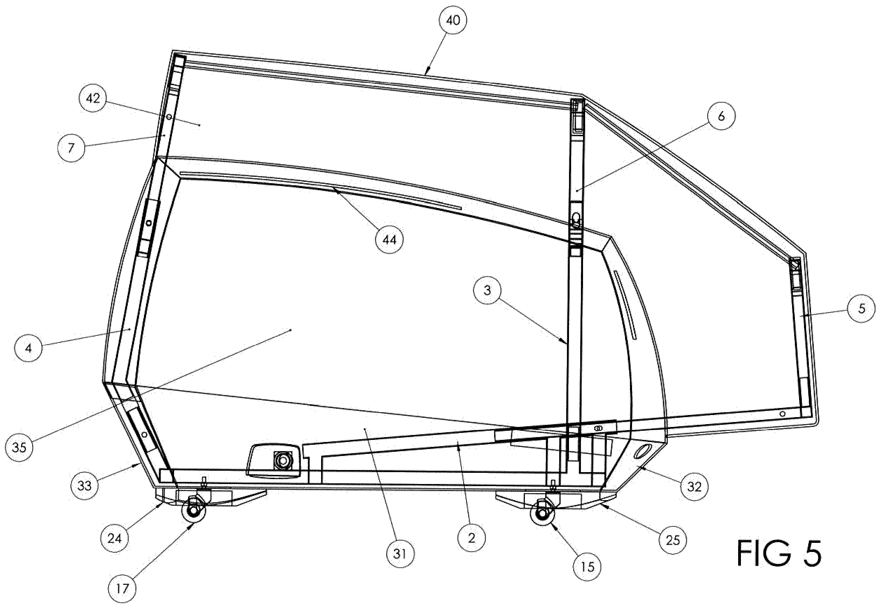

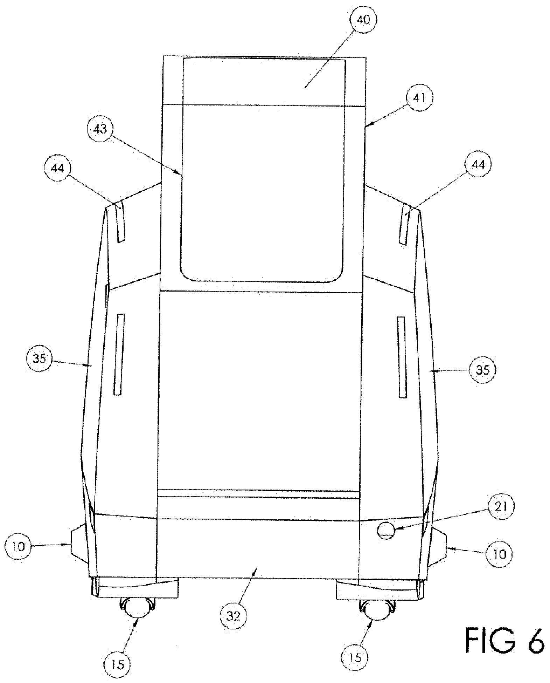

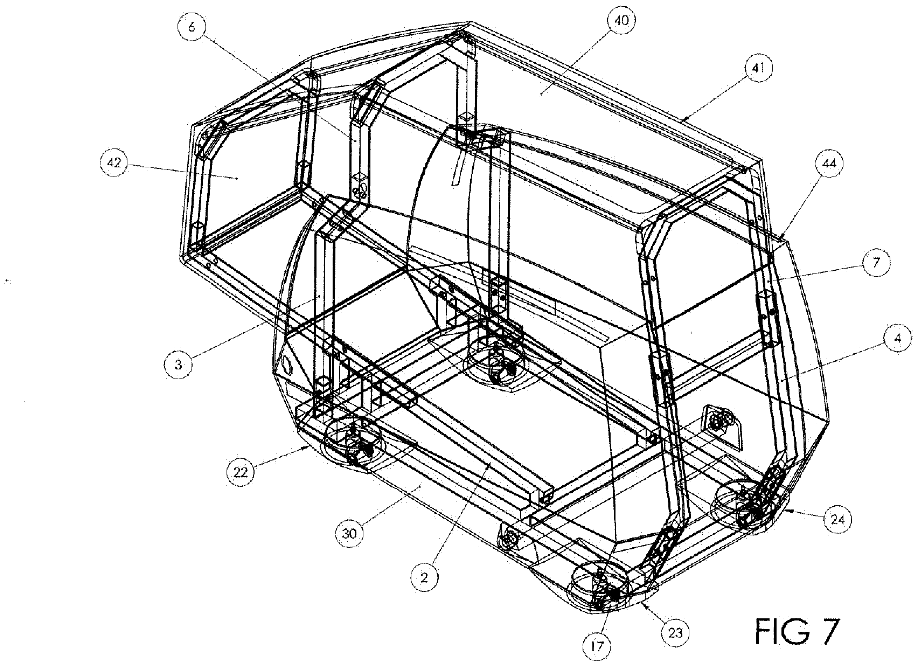

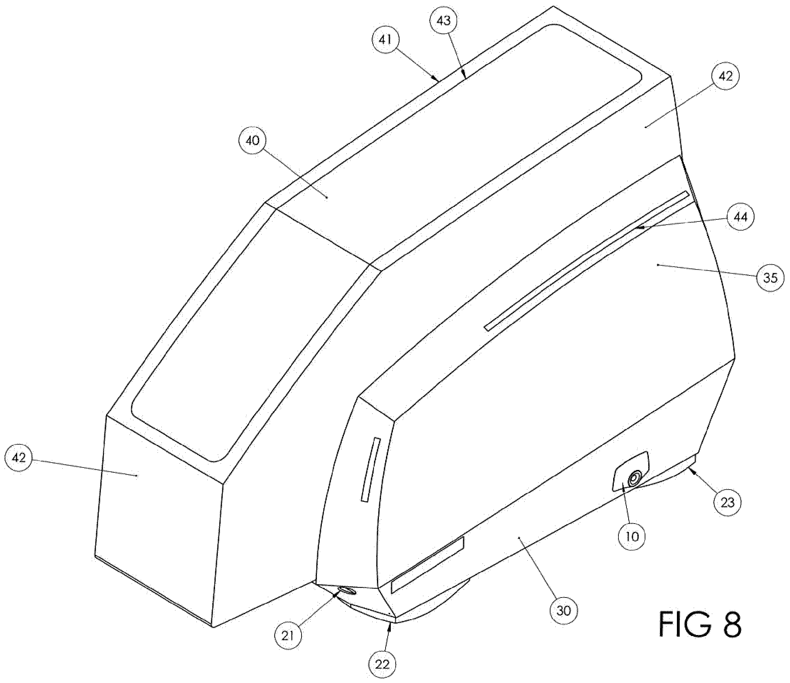

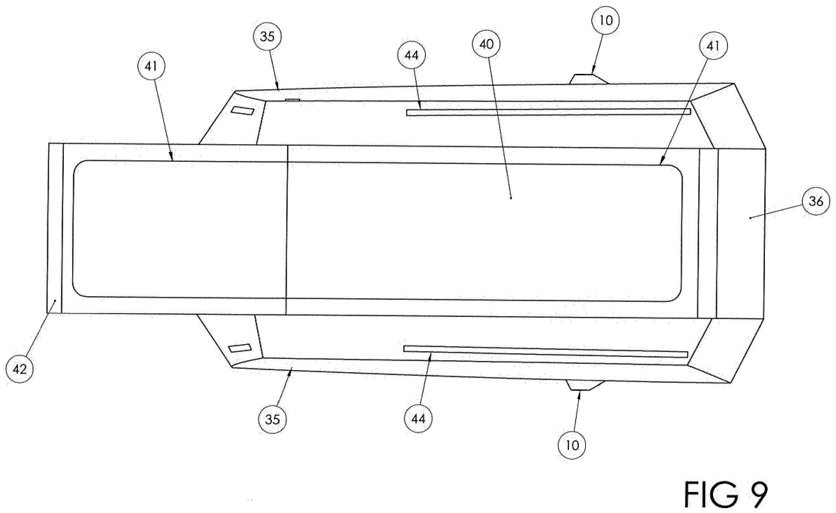

Connected to the lower side of top and front cover 40, and to the tops of side walls 35 and rear wall 36, is a flexible foldable waterproof or water-resistant fabric skirt 42, which may be pleated when the cover 40 is attached by a sliding clasp fastener 41 to the side and rear walls 35, 36, the position shown in Figures 1 to 4, and which can be deployed to maintain the integrity of a waterproof or water-resistant casing when the trailer is reconfigured into a bicycle carrier, as shown in Figures 5 to 9. The cover 40 may be provided with means such as hinged rods and/or elastic ties to ensure that when fastener 41 is operated to separate cover 40 from the side and rear walls and lifted, it unfolds satisfactorily, but is re-pleated when, following extraction of the bicycle components, the trailer is to be used as a trailer.

Access to the interior of the trailer may be obtained by way of a double-ended sliding clasp fastener 43, set in cover 40, enabling the central portion of cover 40 to be opened.

Mounted on the insides of side walls 35 are two pockets (not shown in the drawings) which may be used for stowing the trailer wheels 11 when the trailer is being used to transport a bicycle. Access to the pockets is secured by operating a sliding clasp fastener 44 in each of side walls 35, and the position of the stowed wheels 11 when in the pockets is shown in Figure 10. If it is desired to transport the bicycle over rough ground, which is unsuitable for the castors on the corners, the trailer wheels may be easily extracted from the pockets and fitted onto the sides of the frame 1. Indeed, the trailer wheels can be used when the trailer has been reconfigured and is being used as a carrying case, which has the advantage of being well balanced and much easier to move than a dedicated carrying case such as referred to above. One can use the 'trailer mode' of transport (i.e. use the larger wheels and with the towbar acting as an extension 'arm') even when the trailer is being used as a carrying case for the bicycle itself.

If the trailer as shown in Figures 1 to 4 is to be converted into a bicycle carrier as shown in Figures 5 to 9, the wheels 11 are first removed and the towbar 20 likewise removed. Sliding clasp fastener 41 is released to allow cover section 40 to be lifted, and fastener 43 likewise released to allow access to the interior.

The wheels 11 are stored in the pockets accessible using fasteners 44 in the pockets to either side of the space within the trailer, as shown in Figure 10, and the telescoping members 5 and 6 are then pulled forwards and upwards respectively from members 2 and 4 so that they adopt the position shown in Figure 10. Inverted U-shaped member 6 is mounted atop posts 3. The two wheels of the bicycle, denoted 50 in Figure 10, are dismounted and placed to either side of the central space in the trailer. The frame of the bicycle, denoted 51, is then inserted into the space in the trailer from the front, with the handlebars 53 and saddle 52, each of which has been previously removed from its socket on frame 51, then placed in the positions shown in Figure 10. The positions of the bicycle components may be secured relative to the trailer frame by various burr fastener straps located at strategic positions on base 1 and members 2 to 7.

The bicycle transport unit then rests on wheels 15 and 17. Exterior handles may be provided on the top and/or front of cover 40 to enable the unit to be easily moved in a fashion analogous to moving a piece of wheeled luggage.

As can be seen from figure 10, holes in the sides of the various frame members are provided to enable the members to be fixed in position relative to one another (in the case of telescopic telescoping members) or fixed to joint pieces internally of the tubular frame members, in each case conveniently by means of nut and bolt passing through the frame members.

The bolt head and nut may be moulded in a hand wheel to enable easy manual operation.

As shown in the drawings, the external shell or covering of the trailer is unlined. For side impact protection it is desirable to provide relatively rigid panels attached to the inside of the cover members to provide a more robust wall structure. These should be lightweight, for example of fluted styrene material or a laminate of styrene sheet and fluted styrene sheet. They may be fixed to the interior of the cover by means of hook and eye tapes sewn on to the rigid sheet and the cover respectively.

As noted above, the trailer illustrated in the drawings is one example of how a trailer may be constructed in accordance with the present invention. Numerous variations in the detailed construction may be made without departing from the spirit and scope of the invention, but the construction illustrated is a generally preferred one, in particular because of the ability which it possesses of being capable of being dismantled so that it occupies a very much reduced volume for long-term storage, for example between expeditions undertaken by the user.

By undoing the sliding clasp fasteners and the fasteners which attach the cover to the framework members, the entire cover may be removed from the framework so that it appears as in figure 10 (but without the bicycle components). As can be seen in figure 10, the various parts of the framework which extend upwardly from the base frame 1 can be dismounted (the holes where the nut and bolt fasteners pass through the tubular sections and the internal joint pieces are shown) so that the overall height of the base frame is considerably reduced. Although not specifically shown the legs forming part of member 5 may be detachable so that the vertically extending part of member five, members 3, 4, 6 and 7, and the tie rods 8 may all be separated from one another and placed on top of the base frame one, together with the wheels 11. The cover may be configured to be foldable into a compacted generally flat pad, and all the components then held together, for example by means of a pair of webbing straps with tightening buckles. The entire unit then takes up considerably less storage space and can, however, be easily reassembled to form the reconfigurable trailer described above when needed.

## Claims

1. A bicycle trailer comprising a framework (1), detachable wheels (11) mounted to either side of the framework, and a cover configured to surround the framework, wherein the framework includes a plurality of telescopically connected members enabling the volume encompassed by the framework to be varied, whereby the trailer may be used as a trailer towed behind a bicycle with the frame (1) and cover surrounding a reduced volume for receiving items to be transported, or may be used as a carrying case configured to receive the wheels (50), frame (51) and other components (52, 53) of a bicycle, together with the trailer wheels (11) and a detachable towbar (20), and **characterised in that** the framework comprises two or more telescoping sections enabling the overall height and length of the framework to be extended sufficiently to accommodate a conventional bicycle frame, and which can be moved to a retracted position where they constitute members defining a reduced size interior space for receiving items which the user desires to transport when the trailer is being towed by the bicycle ridden by the user, and the cover comprises a plurality of sheet members enabling the cover to be likewise expanded or reduced to match the volume encompassed by the framework.

2. A bicycle trailer according to Claim 1 wherein the framework comprises a generally rectangular base frame (1), two or more arched members (3, 4, 6, 7) fixed to the frame and two sockets (10) fixed either side of the base frame for the receipt of a trailer wheel (11).

3. A bicycle trailer according to Claim 2 wherein the base frame includes a socket into which a towing bar (20) may be inserted and locked therein.

4. A bicycle trailer according to any one of Claims 1 to 3 wherein the external shell comprises one or more sections (40, 42) which may be deployed in an extended state when the trailer is being used as a carrying case to transport a bicycle and a partly folded relatively unextended state when the trailer is to be towed behind a bicycle.

5. A bicycle trailer according to any one of Claims 1 to 4 and comprising at least two wheels (17) mounted underneath the framework and enabling the trailer to be moved with rotation of those wheels when configured as a carrying case.

6. A bicycle trailer according to Claim 5 comprising four wheels (15, 17) mounted below the variable volume compartment, at least two of which are configured as castors.

7. A bicycle trailer according to any one of claims 1 to 6 and comprising a plurality of handles attached to the exterior of the cover.

8. A bicycle trailer according to any one of claims 1 to 7 wherein the cover comprises a plurality of sections of flexible waterproof or water resistant material (30-33, 35, 36, 40) and attached to the interior of the cover a plurality of rigid lightweight plates to provide impact resistance to the cover.

## Patentansprüche

1. Fahrradanhänger, umfassend ein Rahmengerüst (1), abnehmbare Räder (11), die an beiden Seiten des Rahmens angebracht sind, und eine Abdeckung, die konfiguriert ist, um das Rahmengerüst zu umgeben, wobei das Rahmengerüst mehrere teleskopisch verbundene Elemente aufweist, die es ermöglichen, das von dem Rahmengerüst eingeschlossene Volumen zu variieren, wobei der Anhänger als Anhänger verwendet werden kann, der hinter einem Fahrrad hergezogen wird, mit dem Rahmen (1) und der Abdeckung, die ein reduziertes Volumen für die Aufnahme von zu transportierenden Gegenständen umgibt, oder der verwendet werden kann als ein Transportbehälter, der zum Aufnehmen der Räder (50), des Rahmens (51) und anderer Komponenten (52, 53) eines Fahrrads zusammen mit den Anhängerrädern (11) und einer abnehmbaren Anhängerkupplung (20) konfiguriert ist, und der **dadurch gekennzeichnet ist, dass** das Rahmengerüst zwei oder mehr Teleskopabschnitte umfasst, die es ermöglichen, die Gesamthöhe und -länge des Rahmengerüsts ausreichend zu verlängern, um einen herkömmlichen Fahrradrahmen aufzunehmen, und die in eine eingefahrene Position bewegt werden können, in der sie Elemente bilden, die einen Innenraum mit reduzierter Größe zum Aufnehmen von Gegenständen definieren, die der Benutzer transportieren möchte, wenn der Anhänger von dem vom Benutzer gefahrenen Fahrrad gezogen wird, und wobei die Abdeckung eine Vielzahl von Bahnelementen umfasst, die es ermöglichen, die Abdeckung gleichermaßen zu erweitern oder zu reduzieren, um dem vom Rahmengerüst umfassten Volumen zu entsprechen.

2. Fahrradanhänger nach Anspruch 1, wobei das Rahmengerüst einen weitgehend rechteckigen Grundrahmen (1), zwei oder mehr gebogene Elemente (3, 4, 6, 7) umfasst, die an dem Rahmen befestigt sind, und zwei Halterungen (10), die an beiden Seiten des Grundrahmens für die Aufnahme eines Anhängerrades (11) befestigt sind.

3. Fahrradanhänger nach Anspruch 2, wobei der Grundrahmen eine Halterung umfasst, in die eine Anhängerkupplung (20) eingesetzt und darin verriegelt werden kann.

4. Fahrradanhänger nach einem der Ansprüche 1 bis 3, wobei die Außenhülle einen oder mehrere Abschnitte (40, 42) umfasst, die in einem erweiterten Zustand eingesetzt werden kann, wenn der Anhänger als Transportbehälter zum Transportieren eines Fahrrads verwendet wird, und die in einem teilweise zusammengefalteten, relativ nicht erweiterten Zustand eingesetzt werden kann, wenn der Anhänger hinter einem Fahrrad hergezogen werden soll.

5. Fahrradanhänger nach einem der Ansprüche 1 bis 4 und umfassend wenigstens zwei Räder (17), die unter dem Rahmen montiert sind und mit Drehung dieser Räder das Bewegen des Anhängers ermöglichen, wenn er als Transportbehälter konfiguriert ist.

6. Fahrradanhänger nach Anspruch 5, umfassend vier Räder (15, 17), die unter dem umschlossenen Raum mit variablem Volumen montiert sind, von denen wenigstens zwei als Rollen konfiguriert sind.

7. Fahrradanhänger nach einem der Ansprüche 1 bis 6 und umfassend eine Vielzahl von Griffen, die an der Außenseite der Abdeckung angebracht sind.

8. Fahrradanhänger nach einem der Ansprüche 1 bis 7, wobei die Abdeckung eine Vielzahl von Abschnitten aus flexiblem wasserdichtem oder wasserbeständigem Material (30 - 33, 35, 36, 40) umfasst und eine Vielzahl von starren, leichtgewichtigen Platten an der Innenseite der Abdeckung angebracht ist, um der Abdeckung Stoßfestigkeit zu verleihen.

## Revendications

1. Remorque de vélo comprenant une ossature (1), des roues détachables (11) montées de chaque côté de l'ossature, et un couvercle configuré pour entourer l'ossature, dans laquelle l'ossature comporte une pluralité d'éléments reliés de manière télescopique permettant au volume englobé par l'ossature de varier, moyennant quoi la remorque peut être utilisée comme remorque tirée derrière un vélo avec le cadre (1) et le couvercle entourant un volume réduit pour recevoir des articles à transporter, ou peut être utilisée comme coffre de transport configuré pour recevoir les roues (50), le cadre (51) et d'autres composants (52, 53) d'un vélo, avec les roues de remorque (11) et une barre de traction détachable (20), et **caractérisée en ce que** l'ossature comprend deux sections télescopiques ou plus permettant à la hauteur et à la longueur globales de l'ossature d'être suffisamment étendues pour accueillir un cadre de vélo classique, et qui peuvent être déplacées jusqu'à une position rétractée où elles constituent des éléments définissant un espace intérieur de taille réduite pour recevoir des articles que l'utilisateur souhaite transporter lorsque la remorque est tractée par le vélo conduit par l'utilisateur, et le couvercle comprend une pluralité d'éléments feuilles permettant au couvercle d'être également étendu ou réduit pour s'adapter au volume englobé par l'ossature.

2. Remorque de vélo selon la revendication 1 dans laquelle l'ossature comprend un cadre de base globalement rectangulaire (1), deux éléments arqués ou plus (3, 4, 6, 7) fixés au cadre et deux emboîtures (10) fixées de chaque côté du cadre de base pour la réception d'une roue de remorque (11).

3. Remorque de vélo selon la revendication 2 dans laquelle le cadre de base comporte une emboîture dans laquelle une barre de traction (20) peut être insérée et y être verrouillée.

4. Remorque de vélo selon l'une quelconque des revendications 1 à 3 dans laquelle l'enveloppe externe comprend une ou plusieurs sections (40, 42) qui peuvent être déployées dans un état étendu lorsque la remorque est utilisée comme coffre de transport pour transporter un vélo et un état relativement non étendu partiellement plié lorsque la remorque doit être tractée derrière un vélo.

5. Remorque de vélo selon l'une quelconque des revendications 1 à 4 et comprenant au moins deux roues (17) montées en dessous de l'ossature et permettant à la remorque d'être déplacée avec la rotation de ces roues lorsqu'elle est configurée comme coffre de transport.

6. Remorque de vélo selon la revendication 5 comprenant quatre roues (15, 17) montées sous le compartiment à volume variable, dont au moins deux sont configurées comme galets pivotants.

7. Remorque de vélo selon l'une quelconque des revendications 1 à 6 et comprenant une pluralité de poignées attachées à l'extérieur du couvercle.

8. Remorque de vélo selon l'une quelconque des revendications 1 à 7 dans laquelle le couvercle comprend une pluralité de sections de matériau flexible imperméables ou résistant à l'eau (30-33, 35, 36, 40) et, attachées à l'intérieur du couvercle, une pluralité de plaques légères rigides pour fournir une résistance aux chocs au couvercle.
